Europäisches Patentamt

European Patent Office

Office européen des brevets

Veröffentlichungsnummer: **0 302 492**
A2

# EUROPÄISCHE PATENTANMELDUNG

Anmeldenummer: 88112712.0

Int. Cl.⁴: **C07F 7/08**

Anmeldetag: 04.08.88

Priorität: 05.08.87 DE 3726028

Veröffentlichungstag der Anmeldung:
08.02.89 Patentblatt 89/06

Benannte Vertragsstaaten:
BE DE FR GB NL

Anmelder: **WACKER-CHEMIE GMBH**
**Prinzregentenstrasse 22**
**D-8000 München 22(DE)**

Erfinder: **Fleischmann, Gerald, Dr.**
**Dipl.-Chem.**
**Karrerweg 23**
**D-8261 Emmerting(DE)**
Erfinder: **Eck, Herbert, Dr. Dipl.-Chem.**
**Burg 11**
**D-8263 Burghausen(DE)**
Erfinder: **Wenzeler, Petra**
**Birkenallee 126**
**D-8526 Bubenreuth(DE)**

Verfahren zur Herstellung von niedermolekularen Organo-(poly)siloxanen.

Niedermolekulare Organo(poly)siloxane, die geradkettig und monofunktionell bzw. difunktionell sind, wobei, wenn sie difunktionell sind, die beiden Funktionalitäten in sich von einander chemisch unterscheidenden Siloxaneinheiten vorliegen, werden durch Umsetzung eines cyclischen Diorganopolysiloxans mit einem Lithiumsilanolat in einem Elektronen spendenden, aprotischen Lösungsmittel bei einer Temperatur unterhalb 50° C und Umsetzung der so erhaltenen Lithiumsilanolate mit einem Organohalogensilan hergestellt, wobei das cyclische Diorganopolysiloxan ein Tetrasiloxan ist, das Molverhältnis von Tetrasiloxan zu Lithiumsilanolat 0,9:1 bis 1,1:1 beträgt und daß die Umsetzung von cyclischem Diorganopolysiloxan mit einem Lithiumsilanolat unter Ausschluß von Wasser durchgeführt wird.

EP 0 302 492 A2

## Verfahren zur Herstellung von niedermolekularen Organo(poly) siloxanen

Verfahren zur Herstellung von niedermolekularen Organo(poly)siloxanen, die geradkettig und monofunktionell sind, also z.B. nur ein unmittelbar an Silicium gebundenes Wasserstoffatom je Molekül oder nur eine SiC-gebundene, organofunktionelle Gruppe je Molekül enthalten, durch Umsetzung eines cyclischen Diorganopolysiloxans mit einem Lithiumsilanolat in einem Elektronen spendenden, aprotischen Lösungsmittel bei einer Temperatur unterhalb 50˚C und Umsetzung der so erhaltenen Lithiumsiloxanolate mit einem Organohalogensilan sind bereits bekannt. Hierzu sei auf US 3 481 965 (ausgegeben 2. Dez. 1969, T.G. Selin, General Electric Company) verwiesen.

Es bestand nun die Aufgabe, ein Verfahren zur Herstellung von niedermolekularen Organo(poly)-siloxanen, die geradkettig und monofunktionell bzw. difunktionell sind, wobei, wenn sie difunktionell sind, die beiden Funktionalitäten in sich von einander chemisch unterscheidenden Siloxaneinheiten vorliegen, durch Umsetzung eines cyclischen Diorganopolysiloxans mit einem Lithiumsilanolat in einem Elektronen spendenden, aprotischen Lösungsmittel bei einer Temperatur unterhalb 50˚C und Umsetzung der so erhaltenen Lithiumsiloxanolate mit einem Organohalogensilan bereitzustellen, bei dem besonders leicht zugängliche, cyclische Diorganopolysiloxane eingesetzt werden können und verhältnismäßig geringe Mengen an verhältnismäßig schwer zugänglicher Lithiumverbindung benötigt werden. Diese Aufgabe wird durch die Erfindung gelöst.

Gegenstand der Erfindung ist ein Verfahren zur Herstellung von niedermolekularen Organo(poly)-siloxanen, die geradkettig und monofunktionell bzw. difurktionell sind, wobei, wenn sie difunktionell sind, die beiden Funktionalitäten in sich von einander chemisch unterscheidenden Siloxaneinheiten vorliegen, durch Umsetzung eines cyclischen Diorganopolysiloxans mit einem Lithiumsilanolat in einem Elektronen spendenden, aprotischen Lösungmsittel bei einer Temperatur unterhalb 50˚C und Umsetzung der so erhaltenen Lithiumsiloxanolate mit einem Organohalogensilan, dadurch gekennzeichnet, daß das cyclische Diorganopolysiloxan ein Tetrasiloxan ist, das Molverhältnis von Tetrasiloxan zu Lithiumsilanolat 0,9:1 bis 1,1:1 beträgt und daß die Umsetzung von cyclischem Diorganopolysiloxan mit einem Lithiumsilanolat unter Ausschluß von Wasser durchgeführt wird.

Das erfindungsgemäße Verfahren ist sehr überraschend. In US 3 337 497 (ausgegeben 22. Aug. 1967, E.E. Bostick, General Electric Company Spalte 3, Zeile 59 bis 64 heißt es nämlich:
"Moreover if an octaorganocyclotetrasiloxane for example, octamethylcyclotetrasiloxane, is employed initially with an organolithium compound in place of a hexaorganocyclotrisiloxane, e.g. hexamethyltrisiloxane, again little if any reaction occurs under the prescribed conditions, especially at temperatures below 100˚C."

Bei dem erfindungsgemäßen Verfahren findet dagegen durchaus eine Umsetzung bei Temperaturen unter 100˚C statt, wie z.B. aus den weiter unten folgenden Beispielen zu ersehen.

Die bei dem erfindungsgemäßen Verfahren eingesetzten Octaorganocyclotetrasiloxane können durch die Formel

$$(R_2SiO)_4$$

wiedergegeben werden. In dieser Formel bedeutet R gleiche oder verschiedene, einwertige von aliphatischen Mehrfachbindungen freie Kohlenwasserstoffreste.

Vorzugsweise enthalten die SiC-gebundenen organischen Reste in der bei dem erfindungsgemäßen Verfahren eingesetzten Organosiliciumverbindungen und damit auch die Reste R, $R^1$ und $R^2$ in den in dieser Beschreibung angegebenen Formeln höchstens 18 Kohlenstoffatome je Rest. Beispiele für derartige Reste R sind Alkylreste, wie der Methyl-, Ethyl-, n-Propyl, Isopropyl-, n-Butyl- und sec.-Butylrest sowie Octadecylreste; Cycloalkylreste, wie der Cyclohexylrest und Methylcyclohexylreste; Arylreste, wie der Phenylrest und Xenylreste; Alkarylreste, wie Tolylreste; und Aralkylreste, wie der Benzylrest.

Insbesondere wegen seiner besonders leichten Zugänglichkeit ist als cyclisches Tetrasiloxan Octamethylcyclotetrasiloxan bevorzugt.

Die bei dem erfindungsgemäßen Verfahren bevorzugt eingesetzten Lithiumsilanolate können durch die Formel

$$R^1_a R_{3-a}SiOLi \ ,$$

worin R die oben dafür angegebene Bedeutung hat, $R^1$ ein einwertiger Kohlenwasserstoffrest mit einer aliphatischen Doppelbindung und a 0 oder 1 ist, wiedergegeben werden. Beispiele für Reste $R^1$ sind Alkenylreste, wie der Vinyl- und Allylrest, und Cycloalkenylreste, wie Cyclchexenyl- und Methylcyclohexenylreste.

Besonders bevorzugt sind jedoch Lithiumsilanolate der Formel

$$R^2(CH_3)_2SiOLi ,$$

worin $R^2$ ein Alkylrest mit 2 bis 18 Kohlenstoffatomen je Rest, von allem ein Butylrest, insbesondere der n-Butylrest, ist, jedoch auch z.B. der Ethylrest sein kann.

Es können jedoch bei dem erfindungsgemäßen Verfahren als Lithiumsilanolate z.B. auch Lithiumtrimethylsilanolat, Lithiumtriethylsilanolat, Lithiumtris-(2-ethylhexyl)-silanolat, Lithiumtriphenylsilanolat, Lithiumdimethylvinylsilanolat und Lithiummethyldiphenylsilanolat verwendet werden.

Als Elektronen spendende, aprotische Lösungsmittel können auch bei dem erfindungsgemäßen Verfahren beliebige aprotische Lösungsmittel mit einem einsamen (englisch: unshared) Elektronenpaar im Molekül verwendet werden, in denen bisher die Umsetzung eines cyclischen Diorganopolysiloxans mit einem Lithiumsilanolat stattfinden konnte. Besonders bevozugt ist Tetrahydrofuran.

Die Menge an Elektronen spendendem, aprotischen Lösungsmittel kann ebenfalls auch bei dem erfindungsgemäßen Verfahren die gleiche sein wie bisher bei der Umsetzung eines cyclischen Diorganopolysiloxans mit einem Lithiumsilanolat in einem Elektronen spendenden, aprotischen Lösungsmittel. Es sind dies vorzugsweise 2 bis 50 Gewichtsteile je Gewichtsteil der Gesamtmenge der jeweils eingesetzten Organosiliciumverbindungen.

Vorzugsweise wird die Umsetzung vom Octaorganocyclotetrasiloxan mit einem Lithiumsilanolat bei $0°$ bis $22°C$, insbesondere $19°$ bis $21°C$ durchgeführt. Höhere Temperaturen begünstigen die Bildung von unerwünschten Nebenprodukten, niedrigere Temperaturen ergeben unerwünscht geringe Raumzeitausbeuten.

Der hier in der Beschreibung und mindestens einem der Patentansprüche verwendete Ausdruck "unter Ausschluß von Wasser" bedeutet, daß Reaktionsteilnehmer und Lösungsmittel frei von Wassermengen sind, die 1 Gewichsteil je Million Gewichtsteile des Gesamtgewichts von Reaktionsteilnehmern und Lösungsmittel übersteigen und daß der Zutritt von Wasser zu dem Gemisch aus Octaorganocyclotetrasiloxan, Lithiumsilanolat und Lösungsmittel und schließlich dem bei der Umsetzung erzeugten Produkt ausgeschlossen wird. Das Lösungsmittel kann in bekannter Weise beispielsweise durch Destillation über z.B. einer Natrium-Kaliumlegierung oder Natriumhydrid oder adsorptive Trocknung mittels z.B. Aktivem Aluminiumoxyd (Spezifische BET-Oberfläche: 300 bis 350 $m^2/g$) vom Wasser befreit werden. Die Verwendung von sublimiertem Lithiumsilanolat, wie sie gemäß den Ausführungsbeispielen der eingangs erwähnten US 3 481 965 erfolgt, ist bei dem erfindungsgemäßen Verfahren nicht erforderlich und erfolgt auch vorzugsweise nicht.

Die Dauer der Umsetzung vom Octaorganocyclotetrasiloxan mit einem Lithiumsilanolat beträgt vorzugsweise 12 bis 72 Stunden.

Die Umsetzung vom Octaorganocyclotetrasiloxan mit einem Lithiumsilanolat läßt sich durch die Gleichung

$$(R^2SiO)_4 + R^1_a R_{3-a}SiOLi \rightarrow R^1_a R_{3-a}SiO(R_2SiO)_nLi$$

wiedergeben, wobei R, $R^1$ und a jeweils die oben dafür angegebene Bedeutung haben und n 1, 2, 3, oder 4 ist.

Die in der 2. Stufe des erfindungsgemäßen Verfahrens eingesetzten Organohalogensilane sind vorzugsweise solche der Formel

$$XSiR^3R_2 ,$$

worin R die oben dafür angegebene Bedeutung hat und $R^3$ Wasserstoff, Halogen, insbesonder Chlor, eine Alkoxygruppe mit 1 bis 5 Kohlenstoffatomen oder einen höchstens 18 Kohlenstoffatome aufweisenden Kohlenwasserstoffrest mit einer aliphatischen Mehrfachbindung oder einen insgesamt höchstens 18 Kohlenstoffatome aufweisenden, von aliphatischen Mehrfachbindungen freien Kohlenwasserstoffrest mit einem gegenüber den Reaktionsteilnehmern inerten Substituenten und X Chlor, Brom, oder Jod, insbesondere Chlor, bedeutet, mit der Maßgabe, daß Kohlenwasserstoffreste $R^3$ mit aliphatischer Mehrfachbindung von derartigen Resten $R^1$ verschieden sein müssen.

Beispiele für Kohlenwasserstoffreste $R^3$ mit einer aliphatischen Mehrfachbindung sind der Vinyl-, Allyl- und Cyclohexenylrest sowie Styrylreste.

Beispiele für Kohlenwasserstoffreste $R^3$ mit einem gegenüber den Reaktionsteilnehmern inerten Substituenten sind Acyloxyalkylreste, wie der Gamma- Acryloxypropylrest und gamma-Methacryloxypropylrest

3

EP 0 302 492 A2

sowie Reste mit basischem Stickstoff, wie solche der Formel

$H_2N(CH_2)_2NH(CH_2)_3$- und
Cyclohexyl-$NH(CH_2)_3$-.

Das in der 2. Stufe des erfindungsgemäßen Veerfahrens verwendete Organohalogensilan wird vorzugsweise in Mengen von mindestens 1,02 Mol, insbesondere 1,05 Mol, je Grammatom Lithium eingesetzt.

Die 2. Stufe des erfindungsgemäßen Verfahrens wird vorzugsweise ohne Isolierung der in der 1. Stufe erhaltenen Lithiumsiloxanolate durchgeführt.

Vorzugsweise wird die Umsetzung der Lithiumsiloxanolate mit einem Organohalogensilan bei einer Temperatur unterhalb 50°C ebenfalls unter Ausschluß von Wasser durchgeführt.

Die Umsetzung der in der 1. Stufe des erfindungsgemäßen Verfahrens erhaltenen Lithiumsiloxanolate mit dem Organohalogensilan läßt sich durch die Gleichung

$$R^1_{\overline{a}}Si_{3-a}SiO(R_2SiO)_nLi + XSiR^2R_2 \rightarrow$$
$$R^1_{\overline{a}}Si_{3-a}SiO(SiR^2O)_nSiR^2R_2 + LiX$$

worin R, $R^1$, $R^2$, X, a und n jeweils die oben dafür angegebene Bedeutung haben, wiedergeben.

Schon wegen des geringeren Aufwandes werden beide Stufen des erfindungsgemäßen Verfahrens vorzugsweise beim Druck der umgebenden Atmosphäre, also bei 1020 hPa (abs.) oder etwa 1020 hPa (abs.) durchgeführt. Falls erwünscht, können aber auch höhere oder niedrigere Drücke angewendet werden.

Die erfindungsgemäß hergestellten niedermolekularen Organo(poly)siloxane können überall dort verwendet werden, wo derartige Produkte erwünscht sind. Insbesondere, wenn sie aliphatische Mehrfachbindungen aufweisen, können aus ihnen z.B. Homo- oder Mischpolymerisate hergestellt werden, beispielsweise in Form von gasdurchlässigen Membranen oder Kontaktlinsen. Weiterhin können die erfindungsgemäß hergestellten Organopolysiloxanen z.B. Weichmacher für Polymer bzw. Ausgangsprodukte für solche Weichmacher und Ausgangsprodukte für Emulgatoren sein.

Das bei einem Teil der folgenden Beispiele verwendete Lithiumsilanolat der Formel

n-$C_4H_9(CH_3)_2$SiOLi

wurde wie folgt hergestellt:
Unter trockenem Argon, unter Ausschluß des Zutritts von Wasser und unter Rühren werden zu einer Lösung von 31,25 mmol (9,27 g) über Calciumhydrid destilliertem Octamethylcyclotetrasiloxans in 200 ml über Natriumhydrid destilierten Tetrahydrofurans 125 mmol n-Butyllithium (50 ml einer 2,5 molaren Lösung von n-Butyllithium in n-Hexan) tropfenweise gegeben, wobei durch Außenkühlung des Reaktionsgefäßes dafür gesorgt wird, daß die Temperatur des Inhalts dieses Gefäßes 20°C nicht übersteigt. Anschließend wird noch 3 Stunden unter Ausschluß des Zutritts von Wasser und unter Argon bei 20°C gerührt.

Beispiel 1

a) Zu der Lithium-n-butyldimethylsilanolat-Lösung, deren Herstellung vorstehend beschrieben wurde, werden unter trockenem Argon, unter Ausschluß des Zutritts von Wasser und unter Rühren 125 mmol (37,08 g) über Calciumhydrid destilliertem Octamethylcyclotetrasiloxans tropfenweise gegeben, wobei durch Außenkühlung des Reaktionsgefäßes dafür gesorgt wird, daß die Temperatur des Inhalts dieses Gefäßes 20°C nicht übersteigt. Anschließend wird noch 18 Stunden unter Ausschluß des Zutritts von Wasser und unter Argon bei 20°C gerührt.

b) Zu der Lösung von Lithiumsiloxanolaten, deren Herstellung vorstehend unter a) beschrieben wurde, werden unter trockenem Argon, unter Ausschluß des Zutritts von Wasser und unter Rühren 130 mmol (17,65 g) Vinyldimethylchlorsilan tropfenweise gegeben, wobei durch Außenkühlung des Reaktionsgefäßes dafür gesorgt wird, daß die Temperatur des Inhalts dieses Gefäßes 20°C nicht übersteigt. Nach 10 Stunden Rühren bei 20°C wird das Tetrahydrofuran abdestilliert, vom Lithiumchlorid abfiltriert und das Filtrat bei 0,1 Pa (abs.) fraktioniert.

Die Fraktionen werden gelchromatographisch, mittels Massenspektroskopie, $^1$H-Kernmagnetischem Resonanzspektrum und [29]Si-Kernmagnetischem Resonanzspektrum identifiziert. Die Ergebnisse sind in Tabelle 1 angegeben.

4

Tabelle 1

| Fraktion | Kp. °C | bei (abs.) | Anteil Gew.-% | Ausbeute, bezogen auf umgesetztes Tetrasiloxan Gew.-% d.Th. |
|---|---|---|---|---|
| $BuSi(CH_3)_2OSi(CH_3)_2CH=CH_2$ | 92-93 | 2 hPa | 21,33 | 45,8 |
| $Bu[Si(CH_3)_2O]_3Si(CH_3)_2CH=CH_2$ | 62 | 10 Pa | 3,20 | 6,80 |
| $Bu[Si(CH_3)_2O]_4Si(CH_3)_2CH=CH_2$ | 77-79 | 10 Pa | 4,92 | 10,23 |
| $Bu[Si(CH_3)_2O]_5Si(CH_3)_2CH=CH_2$ | 91-93 | 10 Pa | 16,83 | 35,74 |
| $[Si(CH_3)_2]_4$ | 65-67 | 2 hPa | 52,91 | - |
| nicht identifiziert | - | | 1 | - |
| $Bu = n-C_4H_9$ | | | | |

## Beispiel 2

Die in Beispiel 1 unter a) und b) beschriebene Arbeitsweise wird wiederholt mit der Abänderung, daß bei Zugabe des Octamethylcyclotetrasiloxans und beim anschließenden Rühren die Temperatur 0 °C und nicht 20 °C beträgt.

Die bei der Destillation bei 0,1 Pa (abs.) erhaltenen Fraktionen werden, wie in Beispiel 1 angegeben, identifiziert. Die Ergebnisse sind in Tabelle 2 angegeben.

Tabelle 2

| Fraktion | Anteil Gew.-% | Ausbeute, bezogen auf umgesetztes Tetrasiloxan Gew.-% d.Th. |
|---|---|---|
| $BuSi(CH_3)_2OSi(CH_3)_2CH=CH_2$ | 30,47 | 79,68 |
| $Bu[Si(CH_3)_2O]_3Si(CH_3)_2CH=CH_2$ | 1,52 | 3,98 |
| $Bu[Si(CH_3)_2O]_4Si(CH_3)_2CH=CH_2$ | 1,69 | 4,42 |
| $Bu[Si(CH_3)_2O]_5Si(CH_3)_2CH=CH_2$ | 4,55 | 11,90 |
| $[Si(CH_3)_2O]_4$ | 61,76 | - |
| $Bu = n-C_4H_9$ | | |

## Beispiel 3

Die in Beispiel 1 unter a) und b) beschriebene Arbeitsweise wird wiederholt mit den Abänderungen, daß nach der Zugabe des Octamethylcyclotetrasiloxans nicht 18 Stunden, sondern 72 Stunden bei 20 °C gerührt wird und aus dem beim Abfiltrieren vom Lithiumchlorid erhaltenen Filtrat durch Destillation nur das Hexaorganodisiloxan und das Octamethylcyclotetrasiloxan abgetrennt wird. Die Ausbeute an dem Siloxan der Formel

$$n-C_4H_9Si(CH_3)_2OSi(CH_3)_2CH=CH_2$$

in einer Reinheit von mindestens 95 Gewichtsprozent, beträgt 71 Gewichtsprozent, bezogen auf umgesetztes Tetrasiloxan.

Beispiel 4

a) die in Beispiel 1 unter a) beschriebene Arbeitsweise wird wiederholt mit der Abänderung, daß nach der Zugabe des Octamethylcyclotetrasiloxans 42 Stunden bei 20° C anstelle der 18 Stunden gerührt wird.

b) Zu der Lösung eines Lithiumsilozanolats, deren Herstellung vorstehend unter a) beschrieben wurde, werden unter trockenem Argon, unter Ausschluß des Zutritts von Wasser und unter Rühren 188 mmol (20,5 g) Dimethylchlorsilan tropfenweise gegeben, wobei durch Außenkühlung des Reaktionsgefäßes dafür gesort wird, daß die Temperatur des Inhalts dieses Gefäßes 20° C nicht übersteigt. Nach 2 Stunden Rühren bei 20° C wird das Tetrahydrofuran abdestilliert, vom Lithiumchlorid abfiltriert und das Filtrat bei 15 bis 0,1 Pa (abs.) destilliert. Die dabei erhaltenen Fraktionen werden, wie in Beispiel 1 angegeben, identifiziert. Die Ergebnisse sind in Tabelle 3 angegeben.

Tabelle 3

| Fraktion | Kp. °C | Anteil Gew.-% | Ausbeute, bezogen auf umgesetztes Tetrasiloxan Gew.-% d.Th. |
|---|---|---|---|
| $BuSi(CH_3)_2OSi(CH_3)_2H$ | 48 [1] | 11,81 | 20,12 |
| $Bu[Si(CH_3)_2O]_3Si(CH_3)_2H$ | 90 [1] | 3,31 | 5,64 |
| $Bu[Si(CH_3)_2O]_4Si(CH_3)_2H$ | 68-70 [2] | 8,30 | 14,14 |
| $Bu[Si(CH_3)_2O]_5Si(CH_3)_2H$ | 85-86 [3] | 28,00 | 47,49 |
| $[Si(CH_3)_2O]_4$ | | 41,29 | - |
| nicht identifiziert[4] | - | 7,28 | - |
| $Bu = n-C_4H_9$ | | | |

[1] = bei 2 hPa (abs.)
[2] = bei 10 Pa (abs.)
[3] = bei 20 Pa (abs.)
[4] = höhermolekular; wohl darauf zurückzuführen, daß Dimethylchlorsilan durch Methyldichlorsilan verunreinigt sein kann

Beispiel 5

a) Unter trockenem Argon, unter Ausschluß des Zutritts von Wasser und unter Rühren werden zu einer Lösung von 32 mmol (9,5 g) über Calciumhydrid destilliertem Octamethylcyclotetrasiloxans in 150 ml über Natriumhydrid destillierten Tetrahydrofurans 128 mmol Methyllithium (80 ml einer 1,6 molaren Lösung von Methyllithium in Diethylether) tropfenweise gegeben. Anschließend wird der Inhalt des Reaktionsgefäßes zum Sieden unter Rückfluß erwärmt.

b) Zu der Lithiumtrimethylsilanolat-Lösung deren Herstellung vorstehend unter a) beschrieben wurde, werden nach deren Kühlung auf 15° C unter Argon, unter Ausschluß des Zutritts von Wasser und unter Rühren 128 mmol (38 g) über Calciumhydrid destillierten Octamethylcyclotetrasiloxans tropfenweise gegeben, wobei durch Außenhüllung des Reaktionsgefäßes dafür gesorgt wird, daß die Temperatur des Inhalts dieses Gefäßes 20° C nicht übersteigt. Anschließend wird noch 48 Stunden unter Ausschluß des Zutritts von Wasser und unter Argon gerührt.

c) Zu der Lösung eines Lithiumsiloxanolats, deren Herstellung vorstehend unter b) beschrieben wurde, werden unter trockenem Argon, unter Ausschluß des Zutritts von Wasser und unter Rühren 140 mmol (16,6 g) Vinyldimethylchlorsilan tropfenweise gegeben, wobei durch Außenkühlung des Reaktionsgefäßes dafür gesorgt wird, daß die Temperatur des Inhalts dieses Gefäßes 20° C nicht übersteigt. Nach 6 Stunden Rühren bei 20° C wird das Tetrahydrofuran abdestilliert, vom Lithiumchlorid abfiltriert und das Filtrat beim Druck der umgebenden Atmosphäre bis 15 Pa (abs.) fraktioniert. Die Ergebnisse sind in Tabelle 4 angegeben.

Tabelle 4

| Fraktion | Kp °C | Anteil Gew.-% | Ausbeute, bezogen auf umgesetztes Tetrasiloxan Gew.-% d.Th. |
|---|---|---|---|
| $CH_3Si(CH_3)_2OSi(CH_3)_2CH=CH_2$ | 120-122 [1] | 8,32 | 15,27 |
| $CH_3[Si(CH_3)_2O]_3Si(CH_3)_2CH=CH_2$ | 92 [2] | 7,28 | 13,36 |
| $CH_3[Si(CH_3)_2O]_4Si(CH_3)_2CH=CH_2$ | 110-111 [2] | 14,83 | 27,22 |
| $CH_3[Si(CH_3)_2O]_5Si(CH_3)_2CH=CH_2$ | 135 [2] | 22,51 | 41,32 |
| $[Si(CH_3)_2O]_4$ | | 45,52 | - |
| nicht identifiziert | | 1,52 | - |

[1] bei etwa 1000 hPa (abs.)

[2] bei 2 hPa (abs.)

## Ansprüche

1. Verfahren zur Herstellung von niedermolekularen Organo(poly)siloxanen, die geradkettig und monofunktionell bzw. difunktionell sind, wobei, wenn sie difunktionell sind, die beiden Funktionalitäten in sich von einander chemisch unterscheidenden Siloxaneinheiten vorliegen, durch Umsetzung eines cyclischen Diorganopolysiloxans mit einem Lithiumsilanolat in einem Elektronen spendenden, aprotischen Lösungsmittel bei einer Temperatur unterhalb 50°C und Umsetzung der so erhaltenen Lithiumsiloxanolate mit einem Organohalogensilan, dadurch gekennzeichnet, daß das cyclische Diorganopolysiloxan ein Tetrasiloxan ist, das Molverhältnis von Tetrasiloxan zu Lithiumsilanolat 0,9:1 bis 1,1:1 beträgt und daß die Umsetzung vom cyclischen Diorganopolysiloxan mit einem Lithiumsilanolat unter Ausschluß von Wasser durchgeführt wird.

2. Verfahren nach Anspruch 1, dadurch gekennzeichnet, daß das Tetrasiloxan Octamethylcyclotetrasiloxan ist.

3. Verfahren nach Anspruch 1 und/oder 2, dadurch gekennzeichnet, daß das Lithiumsilanolat solches der Formel

$n\text{-}C_4H_9(CH_3)_2SiOLi$

ist.

4. Verfahren nach mindestens einem der Ansprüche 1 bis 3, dadurch gekennzeichnet, daß die Umsetzung von Octaorganocyclotetrasiloxan mit einem Lithiumsilanolat bei einer Temperatur von höchstens 22°C durchgeführt wird.